# EUROPEAN PATENT SPECIFICATION

(11) **EP 2 224 712 B1**
(45) Date of publication and mention of the grant of the patent: **28.03.2012**
(21) Application number: 09153806.6
(22) Date of filing: 26.02.2009
(51) Int. Cl.: H04M 3/42, H04M 3/436

(54) **Method of providing message information, including call subject information, to a recipient of a telephone call**
Verfahren zur Bereitstellung von Nachrichteninformationen, einschliesslich Anrufsgegenstandinformation, für einen Empfänger eines Telefonanrufs
Procédé de fourniture d'informations de message, y compris des informations de sujet de l'appel, au destinataire d'un appel téléphonique

(43) Date of publication of application: 01.09.2010
(73) Proprietor: RESEARCH IN MOTION LIMITED, Waterloo, Ontario N2L 3W8 (CA)
(72) Inventor: Baccay, Peter, Redwood City CA 94065 (US)
(74) Representative: Fennell, Gareth Charles

(56) References cited:
- EP-A1- 1 988 696
- EP-A2- 0 802 661
- US-A1- 2004 208 301

## Description

### BACKGROUND

### Field

The disclosed and claimed concept relates generally to telephony systems and, more particularly, to a method of providing message information, including information relating to the subject of a telephone call, to the recipient of the telephone call.

### Background Information

As is known, traditional telephony systems implement circuit-switched voice telephone communications technology. Such telephony systems include traditional land line systems that utilize the public switched telephone network (PSTN), and cellular (wireless) systems which implement circuit-switched voice telephone communications via cellular radio channels employing an air interface involving radio frequency (RF) communications and using one or more networks of land based radio transmitters or base stations, commonly referred to as a public land mobile network (PLMN), which interconnect with other PLMNs and the PSTN. In such systems (both land line and cellular), it is known to employ a caller identification service (commonly referred to as caller identification (caller ID or CID) or calling number identification (CNID)). Caller ID is a telephone service that transmits a caller's number to the called party's telephone equipment during the ringing signal, or when the call is being set up but before the call is answered. Where available, caller ID can also provide a name associated with the calling telephone number. The information made available to the called party is typically made visible on the display of the called party's telephone. While the caller's name and telephone number may be useful to the called party, it would also be useful if information relating to the subject of the call could also be effectively provided. Such information would, for example, aid the called party in determining whether to answer the call. Thus, there is a need for a method for effectively providing call subject information to a called party in a telephony system.

EP 0802661 relates to a method and apparatus for interactive call identification of a call to a called party. Identifying messages, either text and voice, can be entered on a call-by call basis by the calling party to provide information regarding the call to enable the called party to screen the incoming call. Such identifying messages can include descriptive information about the identity of the caller, the subject matter of the call or any other user-user information. The identifying message is transmitted in the form of a real-time message sent by the caller and received by the party being called in advance of their accepting the call. The identifying message is created on a call-by-call basis by the calling party.; The called party receives the identifying message and, after receiving the message, the called party can accept, forward or reject the incoming call based on the information provided in the identifying message. The calling party has the option of using either real-time or pro-recorded message functions. The calling party can select, via a predetermined access code, to enter a personal message (voice or text) directly from the location from which the call is being placed after dialing the desired number. Interactive call identification can be initiated either by the called or calling party.

EP 1988696 relates to a method of communicating information describing a voice call from a caller to a recipient comprises steps of obtaining call subject information describing the call and communicating the call subject information to the recipient to inform the recipient about the call. The call subject information can be presented as a subject line displayed to a recipient in which the caller provides information about the nature of the call and/or its urgency, which thus enables the recipient to better judge whether it should be answered immediately. The call subject information can be input as text by the caller or it can be extracted automatically from a calendar application or a messaging application.

US 2004208301 relates to methods, systems, and apparatuses for caller identification messaging are disclosed. According to one embodiment, a calling party uses a Caller ID Messaging Device that supplants the incoming calling line identification (ICLID) signal with a Caller ID Messaging Signal and transmits the Caller ID Messaging Signal to a destination communications address. An alternate embodiment provides that the calling party may use a conventional telephone to access a communications network, activate Caller ID Messaging Services, compose or retrieve a stored Caller ID Message of the Caller ID Messaging Signal, and transmit the Caller ID Messaging Signal to the destination communications address. The Caller ID Message and Caller ID Messaging Signal may include text, video, voice, and/or digital data.

The present invention is set out in the independent claims. Some optional features are set out in the clams dependent thereto.

### BRIEF DESCRIPTION OF THE DRAWINGS

A full understanding of the disclosed and claimed concept can be gained from the following Description when read in conjunction with the accompanying drawings in which:

Figure 1 is a block diagram of a telephony system which provides call subject information to a called party according to one particular, non-limiting embodiment of the disclosed and claimed concept;

Figure 2A is a flowchart showing a method for enabling the calling party to elect whether to include call subject information when a call is placed according to one particular, non-limiting embodiment of the disclosed and claimed concept;

Figures 2B through 2E are exemplary display screens that may be employed in the method of Figure 2A;

Figures 3A through 3C are a flowchart of a method of providing call subject information to a called party in the telephony system of Figure 1 according to one particular embodiment; and

Figure 4 shows an exemplary display screen which displays call subject information in accordance with one particular, non-limiting embodiment of the disclosed and claimed concept.

Similar numerals refer to similar parts throughout the specification.

### DESCRIPTION

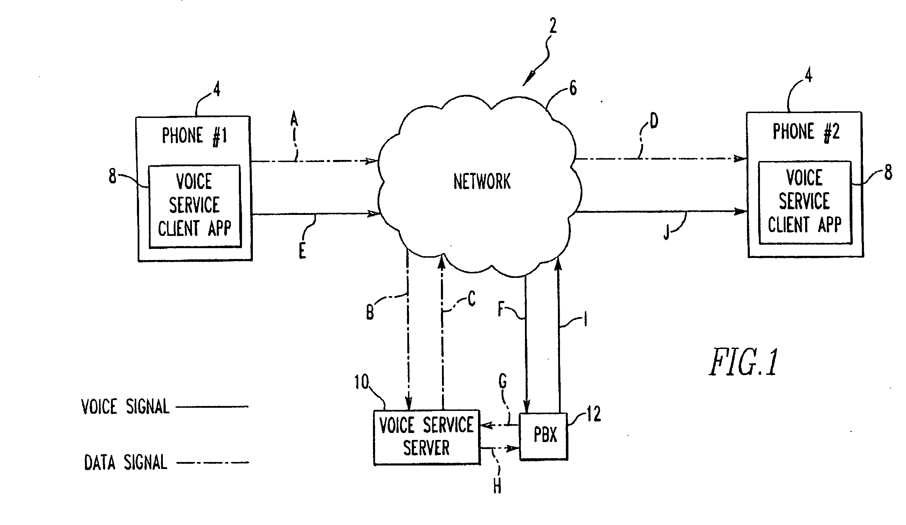

Figure 1 is a block diagram of a telephony system 2 which provides call subject information to a called party according to one particular, non-limiting embodiment of the disclosed and claimed concept. As described in detail elsewhere herein, the solid lines in Figure 1 represent voice signals carried on a voice channel, and the dashed lines in Figure 1 represent data signals carried on a data channel. The telephony system 2 includes first and second phones 4, identified as Phone #1 and Phone #2. Each phone 4 may be a land line telephone or a wireless telephone, such as a known cellular phone or another handheld electronic device having wireless telephone functionality (e.g., a so-called smartphone). Each phone 4 is operatively coupled to a network 6 which is capable of transmitting both voice and data signals as described elsewhere herein. In one particular, non-limiting embodiment, each of the phones 4 is a wireless phone and the network 6 is a cellular network as described elsewhere herein which includes one or more PLMNs coupled to the PSTN. As will be appreciated, other combinations are possible within the scope of the disclosed and claimed concept. In addition, each phone 4 has a voice service client application 8 resident thereon that is executable by the phone 4 (the processor thereof) and which provides the functionality described in detail elsewhere herein. For purposes of illustrating the disclosed and claimed concept, in the examples provided herein, phone 4 identified as Phone #1 is the calling party and phone 4 identified as Phone #2 is the called party. It should be understood, however, that the roles of such phones 4 may be reversed. It should be understood that additional phones 4 may be included in the telephony system 2, such as in a conference call situation where one of the phones 4 is the calling party initiating the conference call and two or more of the other phones 4 are the called parties.

As seen in Figure 1, the telephony system 2 also includes a voice service server 10 that is operatively coupled to the network 6. The voice service server 10 is preferably a computing apparatus (e.g., a server computer or computers) having and executing a voice service server application which provides the functionality described in detail elsewhere herein. In addition, the telephony system 2 further includes a private branch exchange (PBX) 12, or some other suitable network node such as a network gateway, that is operatively coupled to the network 6.

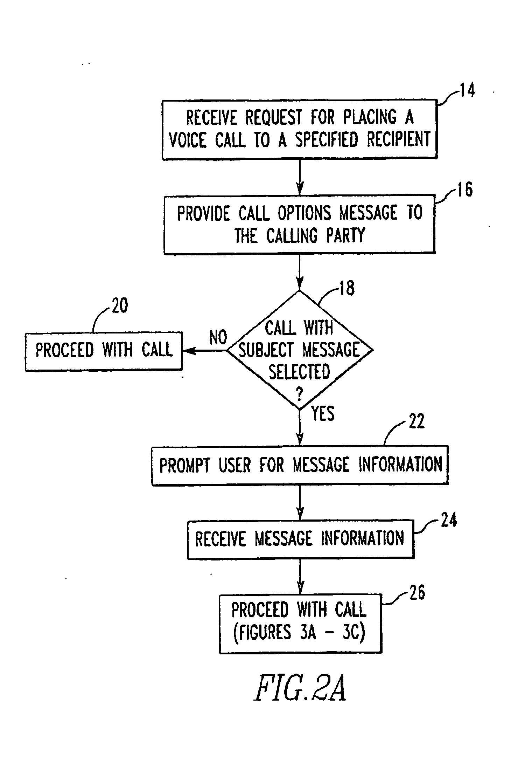

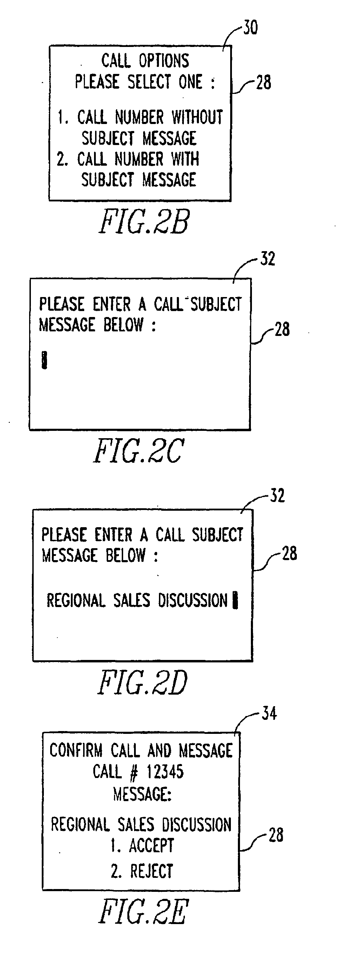

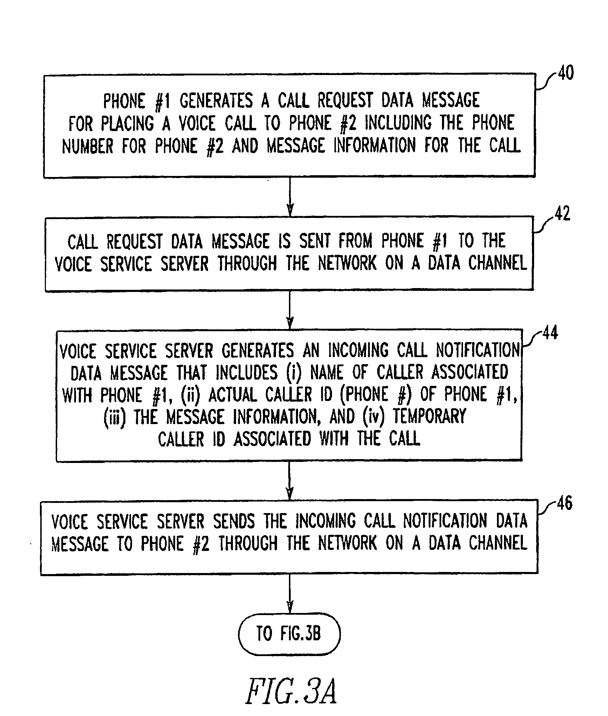

According to an aspect of the disclosed concept, the calling party using phone 4 identified as Phone #1 is, prior to actually initiating a call to a desired number, able to elect whether to (i) simply place the call to the desired number, or (ii) place the call to the desired number (the phone 4 identified as Phone #2 of the called party in the example being used herein) with a call subject message being provided therewith in accordance with the disclosed and claimed concept. Figure 2A is a flowchart showing one, non-limiting method for enabling the calling party to make such an election which is preferably implemented by the voice service client application 8. The method begins at step 14, wherein the voice service client application 8 of the phone 4 identified as Phone #1 receives a request from the calling party (through appropriate input using an input mechanism such as a keypad or touchscreen provided as part of phone 4) for placing a voice call to a specified recipient (e.g., a specified phone number or a contact selected from an address book of the phone 4), namely the called party using phone 4 identified as Phone #2 in the present example. At step 16, the phone 4 identified as Phone #1 provides a call options message to the calling party which asks the calling party whether he or she would like to place the requested call with a call subject message. Figure 2B shows a display 28 of the phone 4 having a screen 30 provided thereon for implementing such a call options message according to one particular, non-limiting embodiment. As seen in screen 30, the calling party is able to select the option he or she prefers. At step 18, a determination is made as to whether the call with subject message option has been selected. If the answer is no, then, at step 20, the call can be placed using known methods. If, however, the answer at step 18 is yes, then, at step 20, the phone 4 identified as Phone #1 prompts the user to enter the desired message information. Figure 2C shows the display 28 having a screen 32 provided thereon for implementing such a prompt according to one particular, non-limiting embodiment Next, at step 24, the phone 4 identified as Phone #1 receives the desired message information. Figure 2D shows the screen 32 after the calling party has entered the desired message information (using an input mechanism such as a keypad or touchscreen provided as part of phone 4). Then, at step 26, the phone 4 identified as Phone #1 proceeds with the call in the manner described below in connection with Figures 3A-3C. Figure 2E shows the display 28 having a screen 34 provided thereon for implementing a confirmation of the call with the desired message information according to one example embodiment.

Figures 3A-3C are a flowchart of a method of providing call subject information to a called party in the telephony system 2 according to one particular embodiment. Again, for purposes of illustration, in the description associated with Figures 3A-3C, phone 4 identified as Phone #1 is the calling party and phone 4 identified as Phone #2 is the called party. It should be understood, however, that the roles of such phones 4 may be reversed, and/or that additional phones 4 may be included in the telephony system 2. The method of Figures 3A-3C assumes that the calling party has made an election to place a call to a desired number (the phone 4 identified as Phone #2 of the called party in the example being used herein) with a call subject message being provided therewith based on, for example, the method shown in Figure 2.

Referring to Figure 3A, the method begins at step 40, wherein Phone 4 identified as Phone #1 generates a call request data message for placing a voice call to Phone 4 identified as Phone #2 which includes (i) the phone number for Phone 4 identified as Phone #2 and (ii) the desired message information for the call which, for example, identifies the subject or purpose for the call. At step 42, the call request data message is sent from Phone 4 identified as Phone #1 to the voice service server 10 through the network 6 on a data channel. The communication of step 42 is shown in Figure 1 by the dashed lines identified by the letters A and B. Next, at step 44, the voice service server 10 generates an incoming call notification data message that includes the following information: (i) the name of the caller associated with Phone 4 identified as Phone #1, i.e., the calling party, (ii) the actual caller ID (i.e., the phone number) of the Phone 4 identified as Phone #1, (iii) the message information that was provided by the calling party, and (iv) a temporary caller ID for Phone 4 identified as Phone #1 (for this particular call) that is generated by the voice service server 10. For illustrative purposes in the present example, the actual caller ID for the Phone 4 identified as Phone #1 will be 12345 and the temporary caller ID for the Phone 4 identified as Phone #1 will be 11111.

At step 46, the voice service server 10 sends the incoming call notification data message generated in step 44 to Phone 4 identified as Phone #2 through the network 6 on a data channel. This data communication is represented by the dashed lines C and D in Figure 1. Thus, following step 46, the Phone 4 identified as Phone #2 (the called party) will, based on the incoming call notification data message it has received, know that it will be receiving a voice call imminently and that that voice call will have associated with it the temporary caller ID generated by the voice service server 10. The Phone 4 identified as Phone #2 will store the data of the incoming call notification data message until used as described herein.

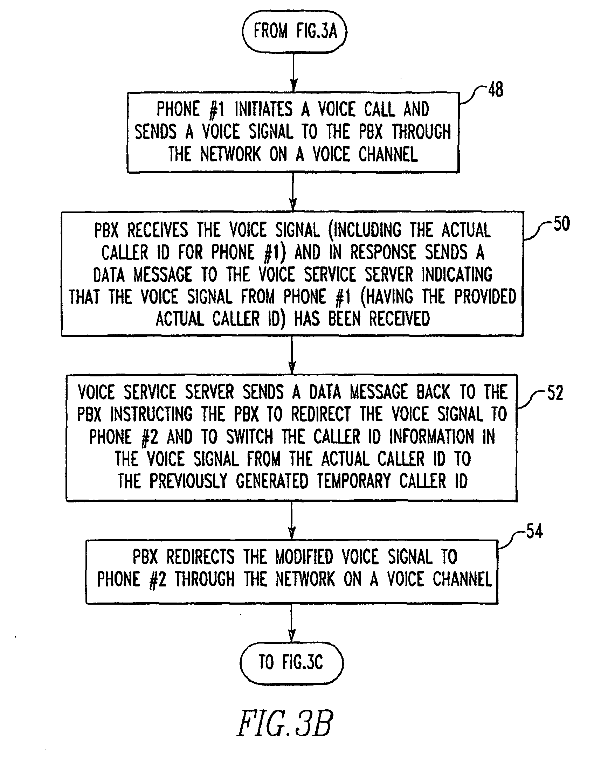

Referring to Figure 3B, the method then proceeds to step 48, wherein the Phone 4 identified as Phone #1 initiates a voice call and sends a voice signal to the PBX 12 through the network 6 on a voice channel. This communication is indicated by the solid voice signal lines E and F of Figure 1. At step 50, the PBX 12 receives the voice signal (including the actual caller ID for Phone 4 identified as Phone #1), and in response sends a data message to the voice service server 10 indicating that the voice signal from Phone 4 identified as Phone #1 (having the provided actual caller ID) has been received This data signal is indicated by the dashed line G of Figure 1. At step 52, the voice service server 10 sends a data message back to the PBX 12 instructing the PBX 12 to redirect the voice signal to the Phone 4 identified as Phone #2 and to switch the caller ID information in the voice signal from the actual caller ID (originally included therewith) to the previously generated temporary caller ID. This data signal is indicated by the dashed line H of Figure 1. At step 54, the PBX 12, in response to the data message received from the voice service server 10, redirects the modified voice signal to Phone 4 identified as Phone #2 through the network 6 on a voice channeL This voice communication is indicated by the solid lines I and J of Figure 1.

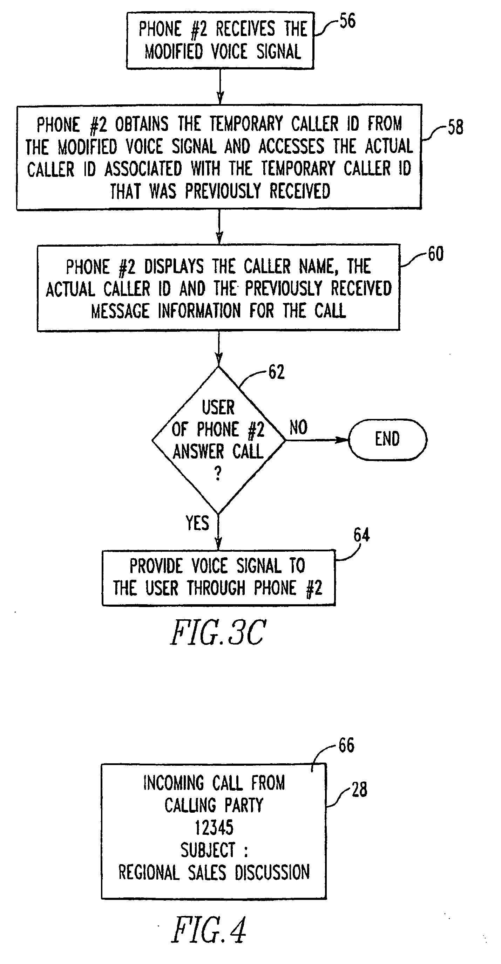

Referring now to Figure 3C, the method then proceeds to step 56, wherein the Phone 4 identified as Phone #2 (the called party) receives the modified voice signal from the PBX 12. Next, at step 58, the voice service client application 8 of the Phone 4 identified as Phone #2 obtains the temporary caller ID from the modified voice signal and accesses the stored actual caller ID that is associated with the temporary caller ID that was previously received (in the incoming call notification data message) along with the other data of the associated incoming call notification data message (caller name and message information). At step 60, the Phone 4 identified as Phone #2 displays the caller name, the actual caller ID and the previously received message information for the call. Thus, the temporary caller ID is used as password for the voice service client application 8 to connect the call with the incoming call notification data message it received just prior to the phone call. So in essence the incoming call notification data message includes call information (subject, name, true phone number/actual caller ID) and a password (temporary caller ID). If a phone call that doesn't contain the password lands on Phone #2 after the incorning call notification data message is processed by the voice service client application 8 of Phone #2, Phone #2 will not connect the information in the incoming call notification data message with that phone call. In an example, the use of the temporary caller ID is be omitted. In this embodiment, the incoming call notification data message will only have the actual caller ID and not the temporary caller ID, and the voice signal sent to the Phone 4 identified as Phone #2 will have the actual caller ID and not the temporary caller ID (i.e., the switch of step 52 is not performed). In such a case, the actual caller ID acts as the password.

Figure 4 shows the display 28 of Phone 4 identified as Phone #2 which includes a screen 66 displaying the information as specified in step 60 according to one particular, non-limiting embodiment. Next, at step 62, a determination is made in Phone 4 identified as Phone #2 as to whether the user thereof (the called party) answers the call. If the answer is no, then the method ends. If, however, the answer is yes, then Phone 4 identified as Phone #2 provides the voice signal for the call to the user. In one particular, non-limiting embodiment, the call log of Phone 4 identified as Phone #2 will store all of the information that was displayed in step 60. Thus, if the called party reviews the call log for prior calls (either missed or received), the called party will be able to associate a subject with the call that was implemented in accordance with Figures 3A through 3C, or any other call generated by that process.

Thus, the telephony system 2 shown in Figure 1 and the methods shown in Figure 2 and Figures 3A through 3C provide a methodology wherein the voice service client application 8 on each Phone 4 and the voice service server 10 perform a call set-up process through a mix of an external data channel and a normal voice channel that enables call subject information to be effectively provided by a calling party to a called party so that it can be displayed along with other caller ID information.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A telephony method, comprising:
receiving a first data message from a first phone (4) in a server (10) over a first data channel, said first data message relating to a voice call to be placed from said first phone (4) to a second phone (4) and including message information relating to said voice call, said message information being provided by a user of said first phone;
in response to receiving said first data message, generating by the server (10) a temporary caller ID for said first phone (4) and generating by the server (10) a second data message, said second data message including first caller ID information relating to said first phone (4) and said message information, wherein said first caller ID information comprises an actual caller ID for said first phone (4) and said temporary caller ID;
sending by the server (10) said second data message to said second phone (4) over a second data channel; and
providing by the server (10) a voice signal originating from said first phone (4) to said second phone (4) over a voice channel, said voice signal including a second caller ID information, said second caller ID information comprising said temporary caller ID, said voice signal causing said second phone (4) to output said message information, wherein said second caller ID information is used in said second phone (4) to access said message information.

2. The telephony method according to claim 1, wherein said causing said second phone (4) to output said message information comprises visually displaying said message information on said second phone (4).

3. The telephony method according to claim 1, said voice signal when received from said first phone (4) including said actual caller ID, said method further comprising substituting said temporary caller ID for said actual caller ID in said voice signal prior to sending said voice signal to said second phone (4) over said voice channel.

4. The telephony method according to claim 1, wherein said message information relates to a subject of said voice call.

5. The telephony method according to claim 1, further comprising receiving said message information in said first phone (4) in response to said user of said first phone (4) entering said message information into said first phone (4) using an input device of said first phone (4).

6. A telephony system (2), comprising:
a server (10) adapted to be coupled to a network (6), said server being adapted to:
i) receive a first data message from a first phone (4) over a first data channel, said first data message relating to a voice call to be placed from said first phone (4) to a second phone (4) and including message information relating to said voice call, said message information being provided by a user of said first phone (4)
ii) in response to receiving said first data message, generate a temporary caller ID for said first phone (4) and generate a second data message, said second data message including first caller ID information relating to said first phone (4) and said message information, wherein said first caller ID information comprises an actual caller ID for said first phone (4) and said temporary caller ID
iii) send said second data message to said second phone over (4) a second data channel; and
iv) cause a voice signal originating from said first phone (4) to be provided to said second phone (4) over a voice channel, wherein said voice signal includes a second caller ID information, wherein said second caller ID information comprises said temporary caller ID, said voice signal causing said second phone (4) to access said message information using said second caller ID information and output said message information.

7. The telephony system according to claim 6, said voice signal when received from said first phone (4) including said actual caller ID, said server being further adapted to cause said temporary caller ID to be substituted for said actual caller ID in said voice signal prior to said voice signal being provided to said second phone (4) over said voice channel.

8. The telephony system according to claim 6, wherein said message information relates to a subject of said voice call.

9. The telephony system according to claim 6, wherein said message information is provided by a user of said first phone (4) in response to said user of said first phone (4) entering said message information into said first phone (4) using an input device of said first phone (4).

## Patentansprüche

1. Ein Telefonieverfahren, das aufweist:
Empfangen einer ersten Datennachricht von einem ersten Telefon (4) in einem Server (10) über einen ersten Datenkanal, wobei die erste Datennachricht auf einen Sprachanruf bezogen ist, der von dem ersten Telefon (4) an ein zweites Telefon (4) platziert werden soll, und Nachrichteninformation bezogen auf den Sprachanruf enthält, wobei die Nachrichteninformation durch einen Benutzer des ersten Telefons bereitgestellt ist;
als Antwort auf den Empfang der ersten Datennachricht, Erzeugen einer vorläufigen Anrufer-ID für das erste Telefon (4) durch den Server (10), und Erzeugen einer zweiten Datennachricht durch den Server (10), wobei die zweite Datennachricht ID-Information für den ersten Anrufer enthält, die auf das erste Telefon (4) und die Nachrichteninformation bezogen ist, wobei die ID-Information für den ersten Anrufer eine tatsächliche Anrufer-ID für das erste Telefon (4) und die vorläufige Anrufer-ID aufweist;
Senden der zweiten Datennachricht durch den Server (10) an das zweite Telefon (4) über einen zweiten Datenkanal; und
Bereitstellen eines Sprachsignals von dem ersten Telefon (4) durch den Server (10) an das zweite Telefon (4) über einen Sprachkanal, wobei das Sprachsignal eine ID-Information für einen zweiten Anrufer enthält, wobei die ID-Information für den zweiten Anrufer die vorläufige Anrufer-ID aufweist, wobei das Sprachsignal das zweite Telefon (4) veranlasst, die Nachrichteninformation auszugeben, wobei die ID-Information für den zweiten Anrufer in dem zweiten Telefon (4) genutzt wird, um auf die Nachrichteninformation zuzugreifen.

2. Das Telefonieverfahren gemäß Anspruch 1, wobei das Veranlassen des zweiten Telefons (4), die Nachrichteninformation auszugeben, aufweist, die Nachrichteninformation visuell auf dem zweiten Telefon (4) anzuzeigen.

3. Das Telefonieverfahren gemäß Anspruch 1, wobei das Sprachsignal, wenn es von dem ersten Telefon (4) ankommt, die tatsächliche Anrufer-ID aufweist, wobei das Verfahren weiter das Ersetzen der vorläufigen Anrufer-ID durch die tatsächliche Anrufer-ID in dem Sprachsignal vor dem Senden des Sprachsignals an das zweite Telefon (4) über den Sprachkanal aufweist.

4. Das Telefonieverfahren gemäß Anspruch 1, wobei die Nachrichteninformation sich auf den Gegenstand des Sprachanrufes bezieht.

5. Das Telefonieverfahren gemäß Anspruch 1, das weiter aufweist, Empfangen der Nachrichteninformation in dem ersten Telefon (4) als Antwort auf den Benutzer des ersten Telefons (4) beim Eingeben der Nachrichteninformation in das erste Telefon (4) unter Verwendung einer Eingabevorrichtung von dem ersten Telefon (4).

6. Ein Telefoniesystem (2), das aufweist:
ein Server (10) ausgebildet, mit einem Netzwerk(6) verbunden zu sein, wobei der Server ausgebildet ist, zum:
i. Empfangen einer ersten Datennachricht von einem ersten Telefon (4) über einen ersten Datenkanal, wobei die Datennachricht sich auf einen Sprachanruf bezieht, der von dem ersten Telefon (4) an ein zweites Telefon (4) platziert werden soll, und Nachrichteninformation bezogen auf den Sprachanruf enthält, wobei die Nachrichteninformation durch einen Benutzer des ersten Telefons (4) bereitgestellt ist;
ii. als Antwort auf den Empfang der ersten Datennachricht, Erzeugen einer vorläufigen Anrufer-ID für das erste Telefon (4), und Erzeugen einer zweiten Datennachricht, wobei die zweite Datennachricht ID-Information für den ersten Anrufer enthält, die auf das erste Telefon (4) und die Nachrichteninformation bezogen ist, wobei die ID-Information für den ersten Anrufer eine tatsächliche Anrufer-ID für das erste Telefon (4) und die vorläufige Anrufer-ID aufweist;
iii. Senden der zweiten Datennachricht an das zweite Telefon (4) über einen zweiten Datenkanal; und
iv. Veranlassen der Bereitstellung eines Sprachsignales von dem ersten Telefon (4) an das zweite Telefon (4) über einen Sprachkanal, wobei das Sprachsignal eine ID-Information für einen zweiten Anrufer enthält, die eine vorläufige Anrufer-ID aufweist, wobei das Sprachsignal das zweite Telefon (4) veranlasst, auf die Nachrichteninformation mittels der ID-Information für den zweiten Anrufer zuzugreifen, und die Nachrichteninformation auszugeben.

7. Das Telefoniesystem gemäß Anspruch 6, wobei das Sprachsignal, wenn es von dem ersten Telefon (4) ankommt, die tatsächliche Anrufer-ID aufweist, wobei der Server (10) weiter ausgebildet ist, das Ersetzen der vorläufigen Anrufer-ID durch die tatsächliche Anrufer-ID im Sprachsignal vor der Bereitstellung des Sprachsignals an das zweite Telefon (4) über den Sprachkanal zu veranlassen.

8. Das Telefoniesystem gemäß Anspruch 6, wobei die Nachrichteninformation sich auf den Gegenstand des Sprachanrufes bezieht.

9. Das Telefoniesystem gemäß Anspruch 6, wobei die Nachrichteninformation von einem Benutzer des ersten Telefons (4) bereitgestellt wird, als Antwort auf den Benutzer des ersten Telefons (4) beim Eingeben der Nachrichteninformation in das erste Telefon (4) unter der Verwendung einer Eingabevorrichtung des ersten Telefons (4).

## Revendications

1. Procédé de téléphonie, comprenant :
la réception d'un premier message de données à partir d'un premier téléphone (4) dans un serveur (10) sur un premier canal de données, ledit premier message de données se rapportant à un appel vocal à passer dudit premier téléphone (4) à un deuxième téléphone (4) et comportant des informations de message se rapportant audit appel vocal, lesdites informations de message étant fournies par un utilisateur dudit premier téléphone ;
en réponse à la réception dudit premier message de données, la génération par le serveur (10) d'une identification temporaire de l'appelant pour ledit premier téléphone (4) et la génération par le serveur (10) d'un deuxième message de données, ledit deuxième message de données comportant des premières informations d'identification de l'appelant se rapportant audit premier téléphone (4) et lesdites informations de message, lesdites premières informations d'identification de l'appelant comprennant une identification effective de l'appelant pour ledit premier téléphone (4) et ladite identification temporaire de l'appelant ;
l'envoi par le serveur (10) dudit deuxième message de données audit deuxième téléphone (4) sur un deuxième canal de données ; et
la fourniture par le serveur (10) d'un signal vocal provenant dudit premier téléphone (4) audit deuxième téléphone (4) sur un canal vocal, ledit signal vocal comportant des deuxièmes informations d'identification de l'appelant, lesdites deuxièmes informations d'identification de l'appelant comprenant ladite identification temporaire de l'appelant, ledit signal vocal amenant ledit deuxième téléphone (4) à délivrer en sortie lesdites informations de message, lesdites deuxièmes informations d'identification de l'appelant étant utilisées dans ledit deuxième téléphone (4) pour accéder auxdites informations de message.

2. Procédé de téléphonie selon la revendication 1, dans lequel ledit fait d'amener ledit deuxième téléphone (4) à délivrer en sortie lesdites informations de message comprend l'affichage visuel desdites informations de message sur ledit deuxième téléphone (4).

3. Procédé de téléphonie selon la revendication 1, ledit signal vocal comportant ladite identification effective de l'appelant lorsqu'il est reçu à partir dudit premier téléphone (4), ledit procédé comprenant en outre le fait de substituer ladite identification temporaire de l'appelant à ladite identification effective de l'appelant dans ledit signal vocal avant d'envoyer ledit signal vocal audit deuxième téléphone (4) sur ledit canal vocal.

4. Procédé de téléphonie selon la revendication 1, dans lequel lesdites informations de message se rapportent à un objet dudit appel vocal.

5. Procédé de téléphonie selon la revendication 1, comprenant en outre la réception desdites informations de message dans ledit premier téléphone (4) en réponse à l'introduction desdites informations de message dans ledit premier téléphone (4) par ledit utilisateur dudit premier téléphone (4) en utilisant un dispositif d'entrée dudit premier téléphone (4).

6. Système de téléphonie (2), comprenant :
un serveur (10) conçu pour être couplé à un réseau (6), ledit serveur étant conçu pour :
i) recevoir un premier message de données à partir d'un premier téléphone (4) sur un premier canal de données, ledit premier message de données se rapportant à un appel vocal à passer dudit premier téléphone (4) à un deuxième téléphone (4) et comportant des informations de message se rapportant audit appel vocal, lesdites informations de message étant fournies par un utilisateur dudit premier téléphone (4),
ii) en réponse à la réception dudit premier message de données, générer une identification temporaire de l'appelant pour ledit premier téléphone (4) et générer un deuxième message de données, ledit deuxième message de données comportant des premières informations d'identification de l'appelant se rapportant audit premier téléphone (4) et lesdites informations de message, lesdites premières informations d'identification de l'appelant comprenant une identification effective de l'appelant pour ledit premier téléphone (4) et ladite identification temporaire de l'appelant,
iii) envoyer ledit deuxième message de données audit deuxième téléphone (4) sur un deuxième canal de données, et
iv) fournir un signal vocal provenant dudit premier téléphone (4) audit deuxième téléphone (4) sur un canal vocal, ledit signal vocal comportant des deuxièmes informations d'identification de l'appelant, lesdites deuxièmes informations d'identification de l'appelant comprenant ladite identification temporaire de l'appelant, ledit signal vocal amenant ledit deuxième téléphone (4) à accéder auxdites informations de message en utilisant lesdites deuxièmes informations d'identification de l'appelant et à délivrer en sortie lesdites informations de message.

7. Système de téléphonie selon la revendication 6, ledit signal vocal comportant ladite identification effective de l'appelant lorsqu'il est reçu à partir dudit premier téléphone (4), ledit serveur étant en outre conçu pour substituer ladite identification temporaire de l'appelant à ladite identification effective de l'appelant dans ledit signal vocal avant que ledit signal vocal ne soit fourni audit deuxième téléphone (4) sur ledit canal vocal.

8. Système de téléphonie selon la revendication 6, dans lequel lesdites informations de message se rapportent à un objet dudit appel vocal.

9. Système de téléphonie selon la revendication 6, dans lequel lesdites informations de message sont fournies par un utilisateur dudit premier téléphone (4) en réponse à l'introduction desdites informations de message dans ledit premier téléphone (4) par ledit utilisateur dudit premier téléphone en utilisant un dispositif d'entrée dudit premier téléphone (4).
